# EUROPÄISCHE PATENTSCHRIFT

(11) **EP 0 870 536 B1**
(45) Veröffentlichungstag und Bekanntmachung des Hinweises auf die Patenterteilung: **04.12.2002**
(21) Anmeldenummer: 98103693.2
(22) Anmeldetag: 03.03.1998
(51) Int. Cl.: B01F 11/00, B01F 11/04, A61C 5/06

(54) **Mischvorrichtung**
Mixing apparatus
Dispositif de melange

(30) Priorität: 11.04.1997 DE 19715118
(43) Veröffentlichungstag der Anmeldung: 14.10.1998
(73) Patentinhaber: Ivoclar Vivadent AG, 9494 Schaan (LI)
(72) Erfinder: Feurstein, Markus, 6800 Feldkirch-Tosters (AT); Senn, Bruno, 9470 Buchs (CH); Mertins, Jürgen, 9473 Gams (CH)
(74) Vertreter: Baronetzky, Klaus, Dipl.-Ing.

(56) Entgegenhaltungen:
- EP-A- 0 506 324
- CH-A- 277 283
- DE-A- 2 745 476
- DE-A- 4 106 388
- US-A- 3 749 371
- US-A- 4 890 931

## Beschreibung

Die Erfindung betrifft eine Mischvorrichtung gemäß dem Oberbegriff von Anspruch 1.

Eine derartige Mischgabel ist beispielsweise aus der US-PS 37 49 371 bekannt. Diese Druckschrift zeigt eine Mischvorrichtung mit zwei voneinander beachtbarten Haltearmen, die die Mischkapsel lagern, die die zu mischende Dentalmasse enthält.

Mischkapseln für Dentalmassen werden regelmäßig in unterschiedlichen Abmessungen hergestellt und verwendet, so daß bei derartigen Mischvorrichtungen die federnde Lagerung der Schwingarme unabdingbar ist. Nachdem die Kapseln sehr hohen Beschleunigungskräften unterworfen werden müssen, um eine ausreichende Durchmischung des Amalgams zu gewährleisten, sind die Zinken der Mischgabel bei der bekannten Vorrichtung hohen Belastungen unterworfen, so daß sie ausreichend stabil gehalten werden müssen, um auch im Dauerbetrieb nicht zu brechen. Dies bedingt, daß für das Einsetzen der Kapseln Vergleichsweise hohe Betätigungskräfte aufgebracht werden müssen.

Ferner sind Mischvorrichtungen vorgeschlagen worden, bei denen die Mischkapsel in einem geschlossenen Raum aufgenommen und insofern sicher verwahrt ist. In diesem Zusammenhang ist es vorgeschlagen worden, über eine Bewegung eines der Haltearme eine Verkantung einzuleiten, um so aufgrund der Verkantung eine sichere Lagerung zu gewährleisten. Bei dieser vorgeschlagenen Lösung ist es besonders nachteilig, daß die Verkantung zwangsläufig nur einseitig wirken kann, so daß bei der Rückwärt s-Schwingbewegung die Verkantungskraft zumindest stark reduziert wird, so daß insofern die Verkantungselemente starken Wechselbelastungen unterworfen sind und ein entsprechender Verschleiß auf Dauer keine sichere Verkantung mehr gewährleistet.

Ein weiteres Beispiel für eine derartige Mischvorrichtung ist aus der DE-OS 27 45 476 ersichtlich, bei der die Mischkapsel in einem nahezu geschlossenen Raum über eine Verriegelungsgabel in der Mischposition gehalten werden soll. Obwohl diese Lösung verschleißarm ärbeitet, hat sie sich nicht durchgesetzt, denn sie erfordert eine ziemlich massive Ausbildung des Haltearmes, ähnlich wie die vorstehend genannte vorgeschlagene Lösung.

Nachdem der Haltearm mitschwingt, müssen dementsprechend für das gleiche Mischergebnis nicht nur die Antriebskräfte vergrößert werden; insbesondere erfolgt eine stärkere Schwingungsbelastung des Antriebsgeräts, so daß entsprechend starke Schwingungen in die Unterlage der Mischvorrichtung eingeleitet werden, die in Zahnarztpraxen regelmäßig unerwünscht sind.

Daher ist man zu den vergleichsweise leichten federnden Mischgabeln zurückgekehrt, wobei bevorzugt harter und leichter Federstahl für die Mischgabeln verwendet wird und eine seitliche Einführung der Kapsel bevorzugt wird. Ein Beispiel für eine derartige Lösung ist aus der DE-41 06 388 C2 zu entnehmen.

Demgegenüber liegt der Erfindung die Aufgabe zugrunde, eine Mischvorrichtung gemäß dem Oberbegriff von Anspruch 1 zu schaffen, die gegenüber bereits vorgeschlagenen Mischvorrichtungen geringere Schwingungen in die Unterlage der Mischvorrichtung einleitet, aber dennoch eine leichte Bedienbarkeit mit einer sicheren Aufnahme auch für Mischkapseln unterschiedlicher Größe erlaubt.

Diese Aufgabe wird erfindungsgemäß durch Anspruch 1 gelöst. Vorteilhafte Weiterbildungen ergeben sich aus den Unteransprüchen.

Überraschend ergibt die erfindungsgemäße Mischvorrichtung die Möglichkeit, mit vergleichsweise geringem Gewicht eine formschlüssige Lagerung der Mischkapsel zu gewährleisten. Die Schwungsmasse, die durch die Fliehkraft nach außen gedrückt wird, ergibt eine dynamisch zunehmende Vergrößerung der Haltekraft, so daß die in Ruhelage bestehende Haltekraft ziemlich gering gewählt sein kann, was die Entnahme und Beladung der Mischvorrichtung stark vereinfacht. Die erfindungsgemäße Mischvorrichtung ermöglicht eine präzise Führung der Haltearme, die auch dann nicht gelöst wird, wenn die Schwingbewegung mit einer Taumelkomponente versehen ist. Stets ist die Haltekraft zu dem Zeitpunkt am größten, zu dem die stärkste Fliehkraft auf die Mischkapsel wirkt.

Die erfindungsgemäße Lösung sieht bevorzugt Anschläge vor, die die Bewegung der Haltearme zueinander begrenzen. Der Abstand bzw. die Aufnahmeöffnung ist dann etwas kleiner als die kleinste einzusetzende Kapsel, so daß die Anschläge in keinem Betriebszustand die Wirkung der Schwungmasse und der Feder beeinträchtigen, aber dennoch die Einführung der Mischkapsel erleichtern.

Bevorzugt ist eine Druckfeder zwischen Schwungmasse und Haltearm geschaltet, die daher auf besonders einfache Weise die Wirkung der Schwungmasse im Stillstand der Mischvorrichtung unterstützt wird. Bevorzugt ist die Druckfeder in einem rohrförmigen Abschnitt des Haltearmes geführt und weist eine in Richtung des Haltearmes wirkende Federrichtung auf. Bei dieser Ausgestaltung wirken die letzten Windungen der Druckfeder zugleich die Schwungmasse unterstützend, so daß die Größe der Schwungmasse weiter reduziert werden kann. Zudem ist durch die rohrförmige Ausgestaltung des Halteabschnitts ein vergleichsweise leichter Aufbau möglich, wobei es sich versteht, daß bevorzugt qualitativ hochwertige Materialien für die Mischvorrichtung verwendet werden.

Weitere Vorteile, Einzelheiten und Merkmale ergeben sich aus der nachstehenden Beschreibung zweier Ausführungsbeispiele anhand der Zeichnung.

Es zeigen:
- Fig. 1: eine schematische Ansicht einer Mischvorrichtung in einer ersten Ausführungsform der Erfindung;
- Fig. 2: eine schematische Ansicht der erfindungsgemäßen Mischvorrichtung in einer zweiten Ausführungsform; und
- Fig. 3: eine Draufsicht auf die Mischvorrichtung in der Ausführungsform gemäß Fig. 2.

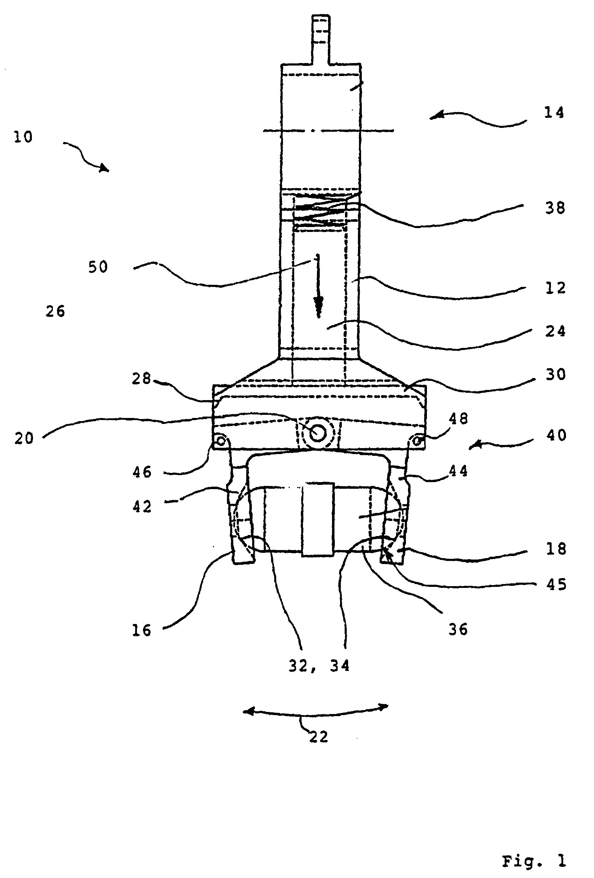

Die in Fig. 1 dargestellte Mischvorrichtung 10 weist in einer ersten Ausführungsform einen Schwingarm 12 auf, der an einem Schwingenlager 14 in an sich bekannter Weise, beispielsweise gemäß der DE-41 06 388 C2 gelagert ist, und zwei Haltearme 16 und 18 an einem Gelenk 20 lagert. Die Schwingungsrichtung erfolgt entlang des Pfeiles 22, so daß bei dieser Ausführungsform die Achse des Gelenks 20 sich im wesentlichen parallel zur Achse des Schwingarmes 12 erstreckt.

Gemäß einer modifizierten Ausgestaltung ist es vorgesehen, daß sich die Gelenkachse gegenüber der hier nicht dargestellten Schwingachse im Winkel von 90° erstreckt, so daß sie im Grunde parallel zur Zeichnungsebene verläuft.

Der Schwingarm 12 nimmt eine Schwungmasse 24 auf, die in einem rohrförmigen Abschnitt 26 des Schwingarms 12 gleitbeweglich gelagert ist. Die Schwungmasse 24 weist in dem dargestellten Ausführungsbeispiel zwei sich je seitlich außen erstreckende Stutzen 28 und 30 auf, die auf die Haltearme 16 und 18 je wirken. Die Haltearme 16 und 18 sind je als Kniehebel ausgebildet und gemeinsam an dem Gelenk 20 gelagert. Nach der Art eines einarmigen Hebels führt die Wirkung der Schwungmasse 24 auf die Haltearme 16 und 18 dazu, daß sie sich mit ihren topfenförmigen Haltebereichen 32, 34 aufeinander zu bewegen, so daß eine dort aufgenommene Mischkapsel 36 durch die Wirkung der Schwungmasse 24, die durch eine Feder 38 unterstützt wird, eingespannt wird.

Die Haltearme 16 und 18 laufen hierzu nach der Art einer Mischgabel 40 in Zinken 42 und 44 aus, die die Haltebereiche 32 und 34 ausbilden.

Bevorzugt ist die Mischkapsel 36 mit ihrem Stirnseiten in den Haltebereichen 32 und 34 gelagert, wobei je nach Stellung der Haltearme größere odere kleinere Mischkapseln aufgenommen werden können. Gemäß einer alternativen Ausgestaltung ist es vorgesehen, daß die Haltearme 16 und 18 die Mischkapsel seitlich lagern.

Im Stillstand der Mischvorrichtung 10 lassen sich die Zinken 42 und 44 gegen die Wirkung der Druckfedern 38 leicht aufspreizen, um die Mischkapsel 36 über ihre Schrägflächen 45 zu entnehmen bzw. einzusetzen. Die Zinken 42 und 44 können nicht kollabieren, denn die Wirkung der Feder 38 wird durch Anschläge 46 und 48 begrenzt, die an dem Schwingarm 12 angebracht sind und verhindern, daß die auf die Schwungmasse 24 wirkende Druckfeder 38 die Kniehebel 16 und 18 zu sehr zusammendrückt.

Im Mischbetrieb folgt ein Schwingen des Schwingarms 12 entsprechend dem Pfeil 22. Diese Bewegung erzeugt eine Fliehkraft für die Schwungmasse 24 entsprechend der Richtung des Pfeiles 50. Aufgrund dieser Fliehkraft werden die Haltearme 16 und 18 während des Mischbetriebs noch stärker zusammengedrückt, so daß sie die ebenfalls der Fliehkraft unterworfene Mischkapsel 36 noch stärker halten, als dies durch die Feder 38 vorgenommen wird. Die Summe der Kräfte der Schwungmasse 24 und der Feder 38 ist so ausgelegt, daß auch die schwerste Mischkapsel 36, die in die erfindungsgemäße Mischvorrichtung eingesetzt wird, die Haltearme 16 und 18 nicht aufzuspreizen vermag.

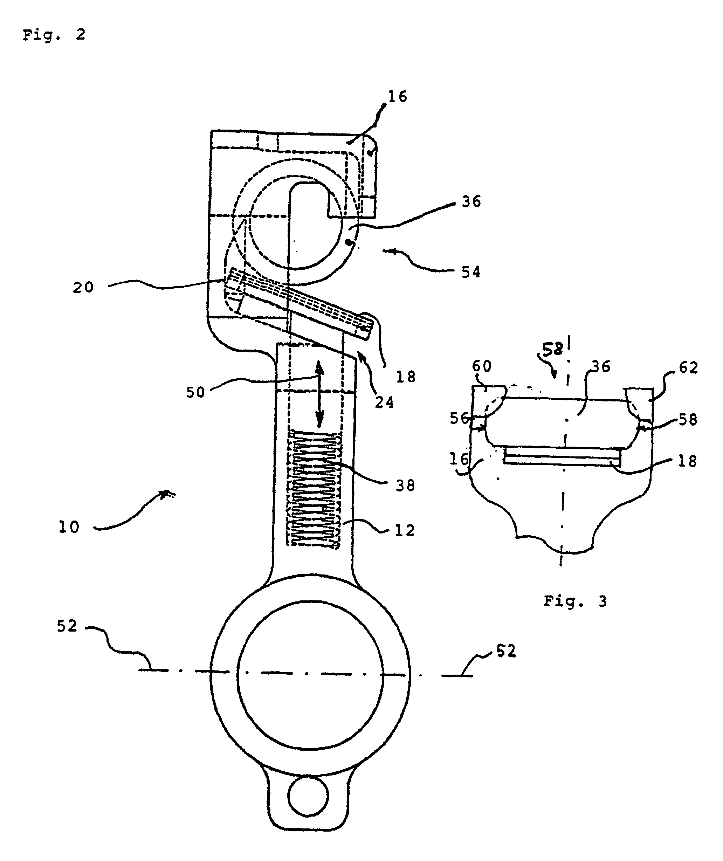

Eine modifizierte Ausgestaltung der erfindungsgemäßen Mischvorrichtung ist aus Fig. 2 ersichtlich. Gleiche Teile werden hier mit gleichen Bezügszeichen wie in den weiteren Figuren bezeichnet. Bei dieser Ausgestaltung, die in einer gegenüber Fig. 1 um 90° gedrehten Darstellung abgebildet ist, erfolgt das Schwingen des Schwingarmes 12 um eine Schwingachse 52. Die Druckfeder 38 ist wesentlich länger ausgebildet als bei der Ausgestaltung gemäß Fig. 1. Dementsprechend wirken ihre von der Schwingachse 52 entfernten Windungen die Schwungmasse unterstützend. In diesem Ausführungsbeispiel sind die beiden Haltearme 16 und 18 asymmetrisch zueinander ausgebildet; der Haltearm 16 umgreift die Mischkapsel 36, die praktisch in einer U-förmigen Vertiefung 54 des Haltearms 16 aufgenommen ist, während der Haltearm 16 auf die Mischkapsel 36 von deren gegenüberliegender Seite drückt. Der Haltearm 18 weist demnach die Schwungmasse 24 auf, und auf ihn wirkt die Druckfeder 38, die insofern ebenfalls partiell als Schwungsmasse verwendet wird.

Wie besser aus Fig. 3 ersichtlich ist, hält der Haltearm 16 die Mischkapsel 36 zusätzlich an ihren Stirnseiten 56 und 58. Diese Ausgestaltung erlaubt die Verwendung eines vergleichsweise geringen Gewichts für den erfindungsgemäßen Schwingarm 12, zumal der mittlere Bereich 58 der Mischkapsel 36 ebenso wie bei dem Ausführungbeispiel gemäß Fig. 1 frei tragend ist und nicht von einem Teil des Schwingarm 12 abgedeckt ist.

Der Haltearm 18 ist in dem Ausführungsbeispiel gemäß Fig. 2 und 3 als an einem Gelenk 20 gelagerte Platte ausgebildet, die die U-förmige Vertiefung 54 einseitig begrenzt und bezogen auf diese schrägstehend ausgebildet ist. Durch diese Ausgestaltung wird das Einsetzen der Mischkapsel 36 sehr erleichtert, so daß auch eine Einhandbedienng der erfindungsgemäßen Mischvorrichtung 10 möglich ist. Bevorzugt ist der Haltearm 18 über einen nicht dargestellten Anschlag in seiner Bewegung entsprechend dem Pfeil 50 begrenzt, so daß die beiden Haltearme 16 und 18 auch in diesem Ausführungsbeispiel nicht zu weit aufeinander zu bewegt werden können.

Gemäß einer modifizierten Ausgestaltung ist zwischen der Druckfeder 38 und dem Haltearm 18 eine zusätzliche Schwungmasse 24 vorgesehen, die die Haltekraft für die Mischkapsel 36 noch erhöht. Aufgrund der endseitigen Abstützung über die Eckbereiche 60 und 62 des Haltearms 16 dem Haltearm 18 gegenüberliegend ist die erforderliche Haltekraft vergleichsweise gering, so daß es bevorzugt ist, den Haltearm 18 allein als Schwungmasse 24 zu verwenden.

Das Gelenk 20 kann in der Ausgestaltung gemäß Fig. 2 und 3 in beliebiger geeigneter Weise ausgebildet sein. Beispielsweise ist es möglich, auch dort Anschläge des Haltearms 16 - und damit des Schwingarms 12 - vorzusehen, die Gelenkcharakter für den Haltearm 18 haben. Bei dieser Ausgestaltung ist durch entsprechende seitliche Anschläge sicherzustellen, daß der plattenförmige Haltearm 18 nicht seitlich ausweichen kann.

## Patentansprüche

1. Mischvorrichtung (10), mit einem Schwingarm (12), der für die Aufnahme einer Mischkapsel (36) an Haltearmen (16,18) bestimmt ist, wobei mindestens ein Haltearm (16;18) gegenüber dem Schwingarm (12) beweglich gelagert und damit die beiden Haltearme (16,18) relativ beweglich zueinander gelagert sind, **dadurch gekennzeichnet, daß** eine Schwungmasse (24) auf mindestens einen Haltearm (18; 16) und über den Haltearm (18; 16) auf die Mischkapsel (36) drückt.

2. Mischvorrichtung nach Anspruch 1, **dadurch gekennzeichnet, daß** der Schwingarm (12) als Mischgabel (40) mit zwei Zinken (42, 44) ausgebildet ist, zwischen denen die Mischkapsel (36) aufnehmbar ist, von denen zur Bildung von Haltearmen (18; 16) mindestens einer gelenkig gelagert ist und daß die Schwungmasse (24) auf einen, insbesondere auf beide Zinken (42, 44) drückt.

3. Mischvorrichtung nach einem der vorhergehenden Ansprüche, **dadurch gekennzeichnet, daß** die je Zinken bildenden Haltearme (16, 18) als Kniehebel ausgebildet sind und der Bewegungsweg der Zinken (42, 44) durch Anschläge (46, 48) begrenzt ist.

4. Mischvorrichtung nach einem der vorhergehenden Ansprüche, **dadurch gekennzeichnet, daß** die Haltearme (16, 18) als einarmige Hebel ausgebildet sind, wobei die von der Schwungmasse (24) aufgebrachte Zentrifugalkraft im Verhältnis 1:2 untersetzt auf die Mischkapsel (36) wirkt.

5. Mischvorrichtung nach einem der vorhergehenden Ansprüche, **dadurch gekennzeichnet, daß** eine Druckfeder (38) von dem Schwingarm (12) umschlossen zwischen der Schwungmasse (24) und dem Schwingarmlager (14) angeordnet ist.

6. Mischvorrichtung nach einem der vorhergehenden Ansprüche, **dadurch gekennzeichnet, daß** einander mit ihren topfförmigen Haltebereichen (32, 34) zugewandte Haltearme (16, 18) die Mischkapsel (36) an deren Stirnseiten (56, 58) aufnehmen.

7. Mischvorrichtung nach einem der vorhergehenden Ansprüche, **dadurch gekennzeichnet, daß** die einander gegenüberliegenden Haltearme (16, 18) vor Aufnahme der Mischkapsel (36) an deren Haltebereichen (32, 34) über mindestens einen Anschlag (46, 48) voneinander soweit beabstandet sind, daß die Mischkapsel (36) ohne gesondertes Auseinanderdrücken der Haltearme (16, 18) über ihre Schräg- und/oder Rundflächen in den Haltebereichen (32, 34) unter kurzzeitigem Aufspreizen der Haltearme (16, 18) eindrückbar ist.

8. Mischvorrichtung nach einem der vorhergehenden Ansprüche, **dadurch gekennzeichnet, daß** die Haltekraft der Haltearme (16, 18) bemessen ist, daß die Summe der durch die Schwungmasse (24) und der durch die Druckfeder (38) eingeleiteten Haltekräfte die Zentrifugalkraft der schwersten eingesetzten Kapsel (36) deutlich übersteigt.

9. Mischvorrichtung nach einem der vorhergehenden Ansprüche, **dadurch gekennzeichnet, daß** ein Haltearm (16) im wesentlichen hakenförmig ausgebildet ist und die Zentrifugalkraft der Mischkapsel (36) aufnimmt und ein weiterer Haltearm (16) als Klemmelement für die Mischkapsel (36) radial nach auswärts in Schwingrichtung betrachtet drückt und die Schwungmasse (24) aufweist.

10. Mischvorrichtung nach einem der vorhergehenden Ansprüche, **dadurch gekennzeichnet, daß** eine insbesondere als Druckfeder (38) ausgebildete Feder mindestens einen Haltearm (18; 16) gegen die Mischkapsel (36) drückt.

11. Mischvorrichtung nach einem der vorhergehenden Ansprüche, **dadurch gekennzeichnet, daß** beide Haltearme (16, 18) an einer gemeinsamen Schwenkachse (20) gelagert sind.

12. Mischvorrichtung nach einem der Ansprüche 9 bis 11, **dadurch gekennzeichnet, daß** ein die Mischkapsel (36) seitlich abstützender und diese hakenförmig umgreifender Haltearm (16) fest, insbesondere einstückig, mit dem Schwingarm (12) verbunden ist und eine im wesentlichen U-förmige Vertiefung (54) bildet, in welcher die Mischkapsel (36) aufnehmbar ist.

13. Mischvorrichtung nach einem der Ansprüche 9 bis 12, **dadurch gekennzeichnet, daß** der die Mischkapsel (36) umgreifende und seitlich abstützende Haltearm (16) die Mischkapsel zusätzlich endseitig abstützt.

## Claims

1. Mixing device (10) comprising a swing arm (12), which is designed to accommodate a mixing capsule (36) on holding arms, with at least one holding arm (16, 18) lodged movably opposite the swing arm and so the two holding arms (16, 18) are lodged relatively movably to each other, **characterised in that** an inertia mass (24) presses onto at least one holding arm (18; 16) and via the holding arm (18; 16) onto the mixing capsule (36).

2. Mixing device according to claim 1, **characterised in that** the swing arm (12) is designed as a mixing fork (40) with two prongs (42, 44), between which the mixing capsule (36) can be accommodated, of which at least one is lodged articulated to form holding arms (18; 16) and that the inertia mass (24) presses on one, particularly on both prongs (42, 44).

3. Mixing device according to one of the preceding claims, **characterised in that** each of the holding arms forming prongs (16, 18) is formed as a knee lever and the motion path of the prongs (42, 44) is restricted by stops (46, 48).

4. Mixing device according to one of the preceding claims, **characterised in that** the holding arms (16, 18) are formed as single-armed levers, where the centrifugal force exerted by the inertia mass (24) on the mixing capsule (36) acts in 1:2 reduction ratio.

5. Mixing device according to one of the preceding claims, **characterised in that** a pressure spring (38) enclosed by the swing arm (12) is arranged between the inertia mass (24) and the swing arm bearing (14).

6. Mixing device according to one of the preceding claims, **characterised in that** holding arms (16, 18), facing each other with their pot-shaped holding regions (32, 34) accommodate end faces (56, 58) of the mixing capsules.

7. Mixing device according to one of the preceding claims, **characterised in that** the holding arms (16, 18) facing each other are distanced from each other via at least one stop (46, 48) before receiving the mixing capsule (36) in their holding regions (32, 34) such that the mixing capsule (36) can be pressed into the holding regions (32, 34) without any specific pushing apart of the holding arms (16, 18) via their slanted and/or round surfaces, under brief spreading of the holding arms (16; 18).

8. Mixing device according to one of the preceding claims, **characterised in that** the retention force of the holding arms (16, 18) is measured such that the sum of retention forces initiated via the inertia mass (24) and the pressure spring (38) clearly exceed the centrifugal force of the heaviest capsule inserted (36).

9. Mixing device according to one of the preceding claims, **characterised in that** a holding arm (16) is essentially formed in a hook shape and accommodates the centrifugal force of the mixing capsule (36) and presses another holding arm (16) radially outwards in the direction of the oscillation as a clamping element for the mixing capsule (36) and is the inertia mass (24).

10. Mixing device according to one of the precedent claims, **characterised in that** a spring formed especially as a pressure spring (38) presses at least one holding arm (18; 16) against the mixing capsule (36).

11. Mixing device according to one of the preceding claims, **characterised in that** both holding arms (16, 18) are lodged on a common pivot axis (20).

12. Mixing device according to one of the claims 9 to 11, **characterised in that** a holding arm (16) supporting the mixing capsule (36) laterally and encompassing it in a hook shape is fixedly connected, especially in a single piece, with the swing arm (12), and essentially forms a U-shaped deepening (54), in which the mixing capsule (36) can be accommodated.

13. Mixing device according to one of the claims 9 to 12, **characterised in that** the holding arm (16) supporting the mixing capsule (36) laterally and encompassing it, additionally supports end faces of mixing capsule 16).

## Revendications

1. Dispositif de mélange (10) qui comporte une biellette (12) qui est conçu pour accommoder une capsule mélangeuse (36) sur des bras de support (16, 18), avec au moins un bras de support (16, 18) logé en face de la biellette mobilement et ainsi les deux bras de support (16, 18) sont logés relativement mobilement l'un par rapport à l'autre, **caractérisé en ce qu'**une masse centrifugeuse (24) appuie sur au moins un bras de support (18; 16) et par le bras de support (18; 16) sur la capsule mélangeuse (36).

2. Dispositif de mélange selon la revendication 1, **caractérisé en ce que** la biellette (12) est conçu comme une fourche mélangeuse (40) à deux dents (42, 44) entre lesquelles la capsule mélangeuse (36) peut être accommodée dont au moins une est logée articulé pour former un bras de support (18; 16) et **en ce que** la masse centrifugeuse (24) appuie sur un, en particulier sur les deux dents (42, 44).

3. Dispositif de mélange selon une des revendications précédentes, **caractérisé en ce que** chacun des dents qui forment des bras de support (16, 18) est formé comme levier à genouillère et la course de mouvement des dents (42, 44) est restreinte par des butoirs (46, 48).

4. Dispositif de mélange selon l'une des revendications précédentes, **caractérisé en ce que** les bras de support (16, 18) sont formés comme leviers à un seul bras où la force centrifuge exercée par la masse centrifugeuse (24) agit sur la capsule mélangeuse (36) en démultipliant dans une relation de 1:2.

5. Dispositif de mélange selon l'une des revendications précédentes, **caractérisé en ce qu'**une source de pression (38) entourée par la biellette (12) est disposée entre la masse centrifugeuse (24) et le roulement de la biellette (14).

6. Dispositif de mélange selon l'une des revendications précédentes, **caractérisé en ce que** des bras de support (16, 18), orientés l'un vers l'autre avec leurs régions de soutien en forme de pot (32, 34) accueillent les capsules mélangeuses sur leur face avant (56, 58)

7. Dispositif de mélange selon l'une des revendications précédentes, **caractérisé en ce que** les bras de support (16, 18) disposés l'un en face de l'autre sont distancé l'un de l'autre dans leurs régions du soutien (32, 34)par au moins un butoir (46, 48) avant d'accueillir la capsule mélangeuse (36) afin que la capsule mélangeuse (36) peut être appuyée dans les zones de retenue (32, 34) sans pression spécifique pour séparer les bras de support (16, 18) par leur surfaces inclinées et/ou rondes, par une séparation de courte durée des bras de support (16; 18).

8. Dispositif de mélange selon l'une des revendications précédentes, **caractérisé en ce que** la force de retenue du bras de support (16, 18) est dimensionnée telle que la somme des forces de retenue initiées par la masse centrifugeuse (24) et le ressort à pression (38) dépassent clairement la force centrifugeuse de la capsule insérée la plus lourde (36).

9. Dispositif de mélange selon l'une des revendications précédentes, **caractérisé en ce qu'**un bras de support (16) est formé essentiellement en forme de crochet et accueille la force centrifuge de la capsule mélangeuse (36) et presse un autre bras de soutien (16) radialement vers l'extérieur dans le sens de l'oscillation, comme élément de serrage pour la capsule mélangeuse (36) et présente la masse centrifugeuse (24).

10. Dispositif de mélange selon l'une des revendications précédentes, **caractérisé en ce qu'**un ressort, formé en particulier comme un ressort à pression (38) appuie au moins un bras de support (18; 16) contre la capsule mélangeuse (36).

11. Dispositif de mélange selon l'une des revendications précédentes, **caractérisé en ce que** les deux bras de support (16, 18) sont logés sur un axe de pivotement commun (20).

12. Dispositif de mélange selon l'une des revendications 9 à 11, **caractérisé en ce qu'**un bras de support (16) supportant latéralement la capsule mélangeuse (36) et l'enveloppant en forme de crochet est relié de façon fixe, surtout en un seul morceau, à la biellette (12), et essentiellement forme un approfondissement un U (54) dans lequel la capsule mélangeuse (36) peut être accueillie.

13. Dispositif de mélange d'après l'une des revendications 9 à 12, **caractérisé en ce que** le bras de support (16) qui supporte latéralement la capsule mélangeuse (36) et l'enveloppe, supporte en outre la face de l'extrémité du bras de support (16).
